# EUROPÄISCHE PATENTSCHRIFT

(11) **EP 3 252 303 B1**
(45) Veröffentlichungstag und Bekanntmachung des Hinweises auf die Patenterteilung: **03.10.2018**
(21) Anmeldenummer: 17170966.0
(22) Anmeldetag: 15.05.2017
(51) Int. Cl.: B29D 99/00, F03D 1/06

(54) **VERFAHREN ZUR BESTIMMUNG EINER POSITIONIERUNG EINES ROTORBLATTGURTES, ROTORBLATT UND WINDENERGIEANLAGE**
METHOD FOR DETERMINING A POSITION OF A ROTOR BLADE BELT, ROTOR BLADE AND WIND POWER PLANT
PROCÉDÉ DE DÉTERMINATION DE LA POSITION D'UNE COURROIE DE PALE DE ROTOR, PALE DE ROTOR ET ÉOLIENNE

(30) Priorität: 03.06.2016 DE 102016006632
(43) Veröffentlichungstag der Anmeldung: 06.12.2017
(73) Patentinhaber: Senvion GmbH, 22297 Hamburg (DE)
(72) Erfinder: FLACH, Christian, 24783 Osterrönfeld (DE)
(74) Vertreter: Wallinger Ricker Schlotter Tostmann

(56) Entgegenhaltungen:
- DE-C2- 2 951 795

## Beschreibung

Die Erfindung betrifft ein Verfahren zur Bestimmung einer Positionierung eines Rotorblattgurtes aus einem faserverstärkten Material in einer Halbschale eines Rotorblatts, das sich in einer Längsrichtung von einer Rotorblattwurzel zu einer Rotorblattspitze erstreckt, wobei der Rotorblattgurt aus einer Lage oder mehreren Lagen eines eine Steifigkeit aufweisenden Faserverbundmaterials in einer Form hergestellt wird, die einer gekrümmten Innenfläche einer Halbschale des Rotorblatts entspricht, und anschließend in die Halbschale eingelegt und mit der Innenfläche der Halbschale verbunden wird, wobei anschließend Stege symmetrisch um eine sich in der Längsrichtung des Rotorblatts erstreckende und die Halbschale schneidende, insbesondere über eine gesamte Länge des Rotorblatts flache und unverwundene, Stegebene auf dem Rotorblattgurt positioniert und mit dem Rotorblattgurt verbunden werden. Die Erfindung betrifft ferner ein Rotorblatt und eine Windenergieanlage.

Die Herstellung von Rotorblattgurten für Rotorblätter erfolgt in vielen Fällen, bevor diese in Schalen oder Halbschalen der Rotorblätter eingesetzt und mit diesen verbunden werden. Dazu werden üblicherweise auf entsprechende Grundformen Lagen trockenen Fasergewebes mit unidirektionaler Ausrichtung gelegt. Die Gurtform gibt dabei die Form der Innenseite der Rotorblattschale oder Halbschale wieder, in die der Gurt später eingesetzt wird. In vielen Fällen wird das trockene Fasergewebe in der Form mittels eines Harzinfusionsverfahrens mit einer Harzmatrix versehen, die getrocknet wird, bevor der fertig gestellte Gurt in die Rotorblatthalbschale eingesetzt wird.

Als weitere strukturelle Bestandteile eines Rotorblatts werden Stege verwendet, die die obere Halbschale und die untere Halbschale, die die Saugseite und die Druckseite des Rotorblatts bilden, miteinander verbinden. Da die Rotorblattgurte strukturell tragende Bestandteile der Halbschalen sind, werden die Stege mit den Rotorblattgurten der Saugseite und der Druckseite verbunden, beispielsweise verklebt oder anlaminiert. Die Stege, üblicherweise ein vorderer Steg und ein hinterer Steg, verlaufen ohne Verwindung in einer Ebene entlang der gesamten Länge des Rotorblattes symmetrisch zu einer Stegebene, die flach ist und deren Orientierung unabhängig von einer konstruktiven Verwindung des Rotorblattprofils ist.

Da die Stege mit ihren Stegfüßen auf den Rotorblattgurten der Druckseite und der Saugseite befestigt werden, verläuft der Rotorblattgurt üblicherweise ebenfalls entlang der Stegebene. Dabei wird die Mittellinie des Rotorblattgurtes entlang der Stegebene geführt. Dies ist bei der Verwendung trockener Fasermaterialien im Allgemeinen unproblematisch, da die trockenen Faserlagen flexibel sind und sich ohne Schwierigkeiten der gekrümmten Innenfläche der jeweiligen Halbschale anpassen.

Ein Problem bei der Herstellung von Rotorblattgurten ist, dass das Aushärten des Harzes ein exothermer Prozess ist. Die über ein großes Volumen des Rotorblattgurtes verteilte Wärme kann zu einer Wellenbildung im Fasermaterial führen, so dass dieses anschließend nicht mehr über die gesamte Gurtlänge ideal parallel ausgerichtet ist. Dies beeinträchtigt dann die Zugfestigkeit und somit die strukturelle Kompaktheit und Funktionsfähigkeit des so hergestellten Rotorblattgurtes. Das Dokument DE 2951795 zeigt sämtliche Merkmale gemäß dem Oberbegriff des Gegenstands des unabhängigen Anspruchs 1.

In den vergangenen Jahren sind Techniken entwickelt worden, Rotorblattgurte aus vorbereiteten Materialien, sogenannten Pultrudaten, herzustellen. So ist es aus US 2011/0243750 A1 bekannt, anstelle von trockenen Glasfasergelegen oder Prepregs pultrudierte Stäbe aus faserverstärkten Materialien zu verwenden. Solche pultrudierten Stäbe bestehen aus einem in einem Strangziehverfahren hergestellten faserverstärkten Material, in dem die Glasfasern oder Kohlefasern parallel ausgerichtet und in einer Harzmatrix bereits eingebettet sind. Durch das Strangziehverfahren sind sie auch ideal parallel zueinander ausgerichtet. Die pultrudierten Stäbe werden dicht aneinandergelegt, so dass sich aus den Stäben der Aufbau des Rotorblattgurtes ergibt. Ein anschließendes Verfügen der Stäbe miteinander führt nicht mehr zu Wellenbildungen.

Solche Lagen aus pultrudierten Stäben weisen allerdings eine wesentlich größere Steifigkeit auf als die zuvor verwendeten Lagen trockenen Fasermaterials, besonders gegen Verzerrungen bzw. Verzug in der Ebene der Materiallage. Es kann daher vorkommen, dass das Verlegen von Lagen aus pultrudiertem Material in die Kontur der Gurtform mit der gekrümmten Oberfläche, die der Kontur der Innenfläche der Rotorblatthalbschale entlang der Stegebene entspricht, dazu führt, dass die nunmehr unflexiblere Lage oder Lagen der Krümmung nicht mehr ohne weiteres folgen können, weil ihre ihrer Steifigkeit entsprechende Toleranz gegenüber Verzug im Material überschritten ist.

Der vorliegenden Erfindung liegt daher die Aufgabe zugrunde, auch mit steiferen faserverstärkten Materialien Rotorblattgurte herzustellen, die der Innenkontur einer Rotorblatthalbschale folgen und ohne Faltenwurf oder Knicke in die jeweilige Rotorblatthalbschale eingesetzt werden können.

Diese der Erfindung zu Grunde liegende Aufgabe wird durch ein Verfahren zur Bestimmung einer Positionierung eines Rotorblattgurtes aus einem faserverstärkten Material in einer Halbschale eines Rotorblatts, das sich in einer Längsrichtung von einer Rotorblattwurzel zu einer Rotorblattspitze erstreckt, wobei der Rotorblattgurt aus einer Lage oder mehreren Lagen eines eine Steifigkeit aufweisenden Faserverbundmaterials in einer Form hergestellt wird, die einer gekrümmten Innenfläche einer Halbschale des Rotorblatts entspricht, und anschließend in die Halbschale eingelegt und mit der Innenfläche der Halbschale verbunden wird, wobei anschließend Stege symmetrisch um eine sich in der Längsrichtung des Rotorblatts erstreckende und die Halbschale schneidende, insbesondere über eine gesamte Länge des Rotorblatts flache und unverwundene, Stegebene auf dem Rotorblattgurt positioniert und mit dem Rotorblattgurt verbunden werden, gelöst, in dem in einem iterativen Berechnungsverfahren über eine volle Länge oder über einen Teilabschnitt des Rotorblatts eine angesichts einer gegebenen Steifigkeit des Materials des Rotorblattgurts gegen Verzug spannungsoptimierte Positionierung des Rotorblattgurtes in der Halbschale in Form eines spannungsoptimierten Pfades entlang der gekrümmten Innenfläche der Halbschale berechnet wird.

Die Erfindung beruht auf dem Grundgedanken, dass angesichts der Steifigkeit des gewählten Materials, das in einer oder mehreren Lagen zum Rotorblattgurt aufgeschichtet wird, von der bisherigen Vorgehensweise, den Rotorblattgurt entlang der Stegebene zu positionieren, abgewichen wird, da dieser Pfad in vielen Fällen durch Bereiche des Rotorblatts führt, in dem dieses eine zu große Krümmung und Krümmungsänderung aufweist. Bei steiferen Materialien wird dabei möglicherweise eine intrinsische Verzugstoleranz des Materials überschritten, sodass es zu Knicken und Falten im Material kommt. Die Verzugstoleranz ergibt sich aus der Steifigkeit gegenüber Stauchungen und Verzug des Materials. Ein trockenes Fasergelege hat eine wesentlich größere Verzugstoleranz als ein bereits vorgefertigtes und vorgehärtetes oder ausgehärtetes Pultrudat, sei es in einer Lage oder Lagen von nebeneinander gelegten pultrudierten Stäben oder einer kompletten pultrudierten Schicht oder Lage oder entsprechender Lagen.

Stattdessen wird erfindungsgemäß ein Pfad bzw. eine Trajektorie des Rotorblattgurtes gesucht, die im Gegensatz zu der bisherigen Vorgehensweise spannungsfreier, insbesondere spannungsminimiert ist. Dazu wird ein iteratives Verfahren verwendet, bei dem die Krümmung der Innenfläche der Halbschale lokal Berücksichtigung findet, so dass Spannungen in den Materiallagen, die zum Rotorblattgurt aufgeschichtet und miteinander verbunden werden, minimiert werden. Der iterative Ansatz geht von einem Startpunkt aus, von dem aus in aufeinanderfolgenden Schritten sukzessive ein spannungsarmer Pfad gefunden wird. Dabei kommen Spannungskriterien geometrischer Art zum Einsatz.

Entsprechende geometrische Betrachtungen beruhen darauf, dass bei einer flächigen oder streifenförmigen Lage, deren Dicke klein ist gegenüber ihrer Längs- und Breitenausdehnung, sich ein solcher Verzug bei der Auflage auf oder in eine gekrümmte Fläche als Verzerrung äußert, ähnlich wie bei der Verzerrung eines bandförmigen Gewebes, das mit Kettfäden in Längsrichtung des Bandes und Schussfäden quer dazu gewebt ist. Die unidirektionalen Fasern des Gurtmaterials entsprechen dabei den Kettfäden, während ihre durch die Einbettung in eine Harzmatrix festgelegte Lagebeziehung quer zur Längsrichtung den Schussfäden entspricht.

Eine Verzerrung dieser Struktur führt dazu, dass die sinnbildlichen "Kettfäden" und "Schussfäden" nicht mehr gerade verlaufen und sich auch nicht mehr rechtwinklig kreuzen, ähnlich einer Kombination aus einer Biegung und Scherung, wobei letztere in diesem Fall nicht flächenwahrend ist. Eine weitere Konsequenz hiervon ist, dass benachbarte Kettfäden bzw. unidirektionale Fasern in Längsrichtung des Rotorblattgurtes, die parallel zueinander verlaufen, in gekrümmten Bereichen auf einer Seite einer sogenannten "neutralen Faser" gestaucht, auf der gegenüberliegenden Seite gedehnt werden. Da im Gurtmaterial Schussfäden nicht existieren, äußert sich das Äquivalent der Stauchung und Dehnung quer zur Richtung der unidirektionalen Fasern in einer Spannung im Matrixmaterial.

Diese Kombination aus Verzerrung, Dehnung, Stauchung und Spannung im Material, zusammengefasst im Rahmen der vorliegenden Erfindung als Verzug, ändert sich lokal, abhängig von der lokalen Kontur der Oberfläche, auf die die Lage aufgelegt wird. Das verwendete Material weist durch seine Steifigkeit nur eine begrenzte Toleranz gegen einen solchen Verzug auf. Da relativ dünne Lagen von Material verwendet werden, die zum Rotorblattgurt aufeinander geschichtet werden, ist eine Biegung des Materials um eine Achse, die in der Fläche der Lage liegt, daher wesentlich einfacher als eine Biegung um eine senkrecht zur Fläche stehende Achse. Eine Überschreitung der Verzugstoleranz führt zu Falten- und Knickbildung.

Der Begriff der Krümmung wird auch in Bezug auf die Oberfläche der Halbschale verwendet, in die der Rotorblattgurt eingelegt wird. In diesem Zusammenhang entspricht der Begriff der Krümmung einer Fläche im dreidimensionalen Raum, der über die Krümmung von Kurven in dieser Fläche beschrieben werden kann.

Das erfindungsgemäße Verfahren wird vorzugsweise für die gesamte Rotorblattlänge angewendet, kann jedoch auch nur in einem Teilabschnitt des Rotorblatts angewendet werden, in dem die lokale Krümmung besonders stark ist und ein herkömmliches Verlegen des Gurtes sich nicht mehr anbietet. In diesem Fall kommt als Randbedingung hinzu, dass der berechnete Abschnitt sich stetig und ohne Knick in den restlichen, herkömmlichen Verlauf des Gurtes einfügt.

Im allgemeinen wird das erfindungsgemäße Verfahren während der Projektierung des Rotorblatts zum Einsatz kommen und ein Modell der Rotorblatthalbschalen verwendet, in welchem die Berechnung des spannungsoptimierten Pfades erfolgt. Der gefundene spannungsoptimierte Pfad wird dabei nicht notwendigerweise die kürzeste Verbindungslinie in der gekrümmten Innenfläche der Halbschale sein, da auch die kürzeste Verbindungslinie, auch "Geodäte" genannt, nicht notwendigerweise spannungsarm in Bezug auf die Breite des Rotorblattgurtes ist. Die Berechnung der kürzesten Verbindungslinie zwischen zwei Punkten auf einer gekrümmten Fläche ist bekannt und in vielen CAD-Programmen als Funktion hinterlegt.

Der Begriff "Abstand" wird im Rahmen der vorliegenden Erfindung als die Länge der kürzesten Linie zwischen zwei Punkten auf der gekrümmten Oberfläche verstanden und definiert. Er entspricht daher der Geodäte. Dieser Abstand wird länger sein als der Abstand in gerader Linie durch den dreidimensionalen Raum.

Eine Randbedingung bei der Verlegung von einer oder mehreren Lagen des faserverstärkten Gurtmaterials ist, dass die Breite des Gurtmaterials, so, wie es in die gekrümmte Innenfläche eingelegt wird, erhalten bleibt, wobei eine geringe Verschmälerung durch einen Verzug des Materials auftreten kann. Das Material setzt dem Verzug aufgrund seiner Steifigkeit einen hohen Widerstand entgegen, so dass der Verzug bei Lagen pultrudierter Stäbe oder als pultrudierte Gesamtlagen nur gering sein kann.

Vorzugsweise beginnt ein möglicher spannungsoptimierter Pfad des Rotorblattgurts mit einem globalen Startpunkt und einem Startwinkel zur Stegebene, wobei die Berechnung des Pfades iterativ in aufeinander folgenden Pfadabschnitten *Aᵢ* mit jeweils vordefinierter oder berechneter Pfadabschnittslänge *Lᵢ* in Richtung auf einen in einem letzten Iterationsschritt zu bestimmenden globalen Endpunkt hin fortschreitet, wobei ein Mittellinienpfad c und zwei Randfaserpfade *a*, *b* gebildet werden, die entlang der Innenfläche der Halbschale verlaufen und die geometrische Mittellinie und die Vorderkante und Hinterkante des Rotorblattgurts repräsentieren, wobei die Randfaserpfade a, *b* zu beiden Seiten in einem vorbestimmten seitlichen geodätischen Abstand auf der gekrümmten Innenfläche der Halbschale vom Mittellinienpfad *c* verlaufen, wobei lokale Endpunkte des Mittellinienpfadabschnitts *cᵢ* und/oder der Randfaserpfadabschnitte *aᵢ, bi,* die in einem iterativen Schritt i errechnet worden sind, im jeweils darauf folgenden iterativen Schritt *i*+*1* als lokale Startpunkte verwendet werden, wobei als Randbedingung genommen wird, dass die Pfadabschnitte *a*_{*i*+}*₁, b*_{*i*+}*₁, c*_{*i*+*1*} im lokalen Startpunkt jeweils stetig und ohne Knick an die Pfadabschnitte *aᵢ, bᵢ, cᵢ* anschließen. Die Konzepte des Mittellinienpfads und der Randfaserpfade sind Repräsentationen des Rotorblattgurtes, und zwar seiner Mittellinie sowie seiner Vorderkante und Hinterkante, in Profiltiefenrichtung des Rotorblattes gesehen. Aufgrund der mechanischen und physikalischen Eigenschaften des Rotorblattmaterials haben die Vorderkante und die Hinterkante des Rotorblattgurtes eine definierte Lagebeziehung zueinander, sodass die Pfade der Mittellinie und der beiden Randfasern nicht unabhängig voneinander sein können.

Ferner ist bei dem iterativen Verfahren in jedem Schritt die Randbedingung zu erfüllen, dass die einzelnen Pfade nahtlos und ohne Knick, also stetig, an die Pfadabschnitte aus den jeweils vorhergehenden Iterationsschritten anschließen. Auf diese Weise ergibt sich eine stetige und knickfreie Linie vom Startpunkt zum Endpunkt. Dabei kann der Startpunkt im Bereich der Rotorblattwurzel liegen und das Verfahren in Richtung auf die Rotorblattspitze gerechnet werden oder umgekehrt von der Rotorblattspitze zur Rotorblattwurzel, oder entsprechend in dem Teilabschnitt des Rotorblatts, in dem die Abweichung von der herkömmlichen Verlegung notwendig ist. Diese Beschränkung auf einen notwendigen Teilabschnitt kann die erforderliche Rechenzeit verkürzen.

Die Pfadabschnittslänge *Lᵢ* wird vorteilhafterweise im Verlaufe der Iteration für jeden folgenden Pfadabschnitt *Aᵢ* als Funktion der anstehenden Krümmung der Innenfläche der Halbschale berechnet, wobei in Bereichen stärkerer Krümmung die Pfadabschnittslänge *Lᵢ* kürzer gewählt wird als in Bereichen mit geringerer Krümmung. Dabei kann die Funktion beispielsweise eine Stufenfunktionen sein, in der verschiedene Längenstufen hinterlegt sind, beispielsweise 1 m in flachen Bereichen, 0,5 m in mäßig gekrümmten Bereichen und 0,25 m in stark gekrümmten Bereichen der Innenfläche der Halbschale. Diese Werte sind rein beispielhaft zu verstehen, stellen allerdings im Vergleich zum Maßstab der Krümmung der Rotorblätter eine mögliche Abstufung dar. Alternativ kann ein die Schrittweite stetig, also ohne Sprünge, von einem Maß der Krümmung auf dem vorausliegenden Abschnitt der Halbschale abhängen, beispielsweise in Bezug auf einen mittleren Krümmungsradius der Innenfläche der Halbschale entlang der folgenden 10, 20 oder 50 cm. Auf diese Weise kann bei gewahrter hoher Genauigkeit der Pfadberechnung in schwierigen, stark gekrümmten Bereichen die Rechenzeit dadurch verkürzt werden, dass in schwach gekrümmten Bereichen die Schrittweite vergrößert wird und daher weniger Iterationsschritte notwendig sind.

Vorteilhafterweise wird oder werden in jedem Iterationschritt des iterativen Verfahrens lokal ein Verzug des Gurtmaterials minimiert, wobei insbesondere eine Stauchung oder Streckung der Vorderkante und/oder Hinterkante des Gurtmaterials und/oder eine Längsverschiebung benachbarter Fasern im Gurtmaterial relativ zueinander minimiert wird oder werden.

In einer vorteilhaften Vorgehensweise wird in jedem iterativen Schritt *i*, ausgehend vom lokalen Startpunkt der Mittellinie *c,* ein spannungsoptimierter Pfadabschnitt *A_{i,opt}* aus einer Menge möglicher Pfadabschnitte *Aᵢ* berechnet, die ihrerseits ermittelt werden, indem mögliche Mittellinienpfadabschnitte *cᵢ* der Pfadabschnittslänge *Lᵢ* mit möglichen lokalen Endpunkten ermittelt werden, wobei zu jedem möglichen Mittellinienpfadabschnitt *cᵢ* zunächst eine Abschlusslinie entlang der Innenfläche der Halbschale ermittelt wird, die rechtwinklig zum jeweiligen möglichen Mittellinienpfadabschnitt *cᵢ* durch dessen lokalen Endpunkt verläuft, wobei anschließend Randfaserpfadabschnitte *aᵢ, bᵢ* ermittelt werden, indem auf der ermittelten Abschlusslinie im vorbestimmten seitlichen Abstand zum Endpunkt des möglichen Mittellinienpfadabschnitts *cᵢ* entsprechende Endpunkte von Randfaserpfadabschnitten *aᵢ, bᵢ* festgelegt werden und anschließend Randfaserpfadabschnitte *aᵢ, bᵢ* zwischen den lokalen Startpunkten und Endpunkten der Randfaserpfadabschnitte *aᵢ, bᵢ* berechnet werden, die jeweils den vorbestimmten seitlichen Abstand zum möglichen Mittellinienpfadabschnitt *cᵢ* haben, wobei anschließend aus den ermittelten möglichen Pfadabschnitten *Aᵢ* ein spannungsoptimierter Pfadabschnitt *A_{i,opt}* ermittelt wird, bei dem eine Differenz der Längen beider Randfaserpfadabschnitte *aᵢ, bᵢ* im Pfadabschnitt *A_{i,opt}* kleiner ist als bei anderen möglichen Pfadabschnitten *Aᵢ*, insbesondere minimal ist.

Diese Herangehensweise vereinfacht die Problematik des Verzugs auf das Konzept, dass derjenige Teil der Verzerrung bzw. des Verzugs zunächst in Kauf genommen wird, der sich in einer Streckung oder Stauchung von Fasern des Gurtmaterials in Längsrichtung des Rotorblätter kurz äußert, während der Kreuzungswinkel zu den gedachten "Schussfäden" im rechten Winkel gehalten wird, was bedeutet, dass eine Längsverschiebung benachbarter Fasern im Gurtmaterial relativ zueinander unterbunden wird. Dieser rechte Winkel des Kreuzungswinkels ist hierbei durch die Art der Bildung des Pfadabschnitts festgelegt, und die Streckung und Stauchung des Materials in Längsrichtung der Materialbahn wird durch die Minimierung der Längendifferenz zwischen den Randfaserpfadabschnitten minimiert.

Bei diesem Iterationsverfahren wird für jeden vorausliegenden Pfadabschnitt eine Menge oder Schar von möglichen Mittellinienpfadabschnitten in Erwägung gezogen. Diesen möglichen Mittellinienpfadabschnitten ist gemeinsam, dass die Pfadabschnitte einerseits stetig am Pfadabschnitt der vorherigen Iteration anschließen und andererseits die gleiche Länge bzw. das gleiche Bogenmaß auf der gekrümmten Oberfläche haben. Eine mögliche Vorgehensweise dabei ist, vom lokalen Startpunkt ausgehend zunächst in gleicher Richtung bis zum Erreichen des jeweiligen Abstandes bzw. der vorgegebenen Pfadlänge weiterzugehen und für weitere mögliche Pfadabschnitte eine fortschreitende eigene Krümmung der Mittellinie in beide Richtungen von der Mittelrichtung zu berechnen. Die von der Mittelrichtung oder Geradeausrichtung abweichenden möglichen Pfadabschnitte würden in einer ebenen Fläche dazu führen, dass die beiden Randfaserpfadabschnitte unterschiedlich lang werden. Da aber auch die Randfaserpfadabschnitte in der gekrümmten Innenfläche der Halbschale verlaufen, ist derjenige Pfad, bei dem die beiden Randfaserpfadabschnitte gleich lang sind oder wenigstens den geringsten Längenunterschied zueinander haben, häufig einer, bei dem die Mittellinie von der Geradeausrichtung abweicht.

Das Kriterium des geringsten Längenunterschiedes der Randfaserpfadabschnitte ist gleichbedeutend mit einem minimierten Verzug der Lagen des Gurtmaterials, da das andere Kriterium des rechten Kreuzungswinkels bereits in der Art der Berechnung vorausgesetzt wird. Dieser minimierte Verzug bedeutet, dass besonders wenig Spannungen in das Gurtmaterial eingetragen werden und somit einen spannungsarmen Verlauf des Gurtes. Ein gewisser Verzug wird sich allerdings immer noch dadurch ergeben, dass das Gurtmaterial entlang einer gekrümmten Oberfläche abgelegt wird. Dieser Verzug wird allerdings im Vergleich zum Stand der Technik deutlich reduziert.

In einer alternativen vorteilhaften Vorgehensweise werden in jedem iterativen Schritt *i*, ausgehend von den lokalen Startpunkten der Randfaserpfadabschnitte *aᵢ, bᵢ,* mögliche Paare gleich langer Randfaserpfadabschnitte *aᵢ, bᵢ* ermittelt, deren Abstand auf der gekrümmten Innenfläche der Halbschale der Breite des entsprechend geführten Rotorblattgurtes entspricht, wobei anschließend aus den ermittelten möglichen Paaren von Randfaserpfadabschnitten *aᵢ, bᵢ* ein spannungsoptimierter Pfadabschnitt *A_{i,opt}* ermittelt wird, bei dem ein Betrag eines Kreuzungswinkels zwischen einer durch lokale Endpunkte der Randfaserpfadabschnitte *aᵢ, bᵢ* führenden Abschlusslinie und einem Randfaserpfadabschnitt *aᵢ, bᵢ* oder einem zwischen den Randfaserpfadabschnitten *aᵢ, bᵢ* liegenden Mittellinienpfadabschnitt *cᵢ* weniger von 90° abweicht als bei anderen möglichen Paaren, insbesondere gleich 90° ist.

Geometrisch betrachtet unterscheidet sich diese zweite Alternative daher von der ersten Alternative darin, dass nunmehr der Kreuzungswinkel losgelassen und minimiert wird, während jegliche Stauchung und Streckung der Randfaser bzw. der Vorder- und/oder Hinterkante des Gurtmaterials bereits in der Bildung möglicher Pfadabschnitte unterbunden wird. Die Längsverschiebung der unidirektionalen Fasern relativ zueinander wird daher erlaubt, aber minimiert. Die beiden Alternativen sind somit zueinander komplementär.

So wird in dieser zweiten Alternative im Unterschied zur vorgenannten Alternative bereits in jedem Iterationsschritt die Länge der Randfaserpfadabschnitte zueinander gleich gehalten. Damit wird das Minimierungskriterium der ersten Alternative zur fixierten Randbedingung dieser zweiten Alternative. Eine Konsequenz hiervon ist, dass die Abschlusslinie, die durch die beiden Endpunkte der Randfaserpfadabschnitte verläuft, nicht mehr rechtwinklig zu den Randfaserpfadabschnitten und dem dazwischen sich ergebenden Mittellinienpfadabschnitt ist. Hier wird der Verzug, der sich in den Lagen des Materials bei der Verlegung in der Form ergibt, sichtbar. Der Winkel, unter dem die so gebildete Abschlusslinie die Randfaserpfadabschnitte kreuzt, kann von Iterationsschritt zur Iterationsschritt variieren. Die Mittellinie ergibt sich über das Bogenmaß über der Verbindungslinie zwischen den Randfaserpfadabschnitten. Der Kreuzungswinkel kann bei der Auswahl möglicher Pfadabschnitte als Optimierungskriterium minimiert werden.

Bei der Berechnung möglicher Randfaserpfadabschnitte ist es möglich, zunächst einen Randfaserpfadabschnitt zu bestimmen, der eine entsprechende vorgegebene oder berechnete Pfadlänge hat, beispielsweise denjenigen, der die Vorderkante oder aber die Hinterkante des Rotorblattgurtmaterials repräsentiert, und anschließend den passenden parallelen Randfaserpfadabschnitt des Paares zu bestimmen, der den vorgeschriebenen Abstand zum zuerst ermittelten Randfaserpfadabschnitt einhält und die entsprechende Länge aufweist.

Die beiden alternativen Berechnungsweisen können zu leicht voneinander abweichenden Ergebnissen kommen, da die Berechnungskriterien bzw. Randbedingungen einerseits und die Optimierungskriterien andererseits vertauscht sind. Sie werden aber in den meisten Fällen dicht beieinander bzw. übereinander liegen. Insbesondere bei kleiner Schrittweite werden sie sich einander stark annähern, da ihnen die gleichen Überlegungen und Kriterien zu Grunde liegen. Bei diesen Kriterien handelt es sich um die Längendifferenz der Randfaserpfadabschnitte einerseits und den Kreuzungswinkel der Abschlusslinie eines Iterationsschrittes mit den Mittellinienpfadabschnitten oder Randfaserpfadabschnitten des jeweiligen Iterationsschrittes andererseits. Beide Kriterien sind jeweils ein Aspekt des Verzugs des Materials.

Weiterhin ist es vorteilhaft, die beiden Alternativen miteinander zu verbinden. Hierzu werden sowohl die Kreuzungswinkel als auch die Längendifferenz der Randfaserpfadabschnitte als Optimierungsvariablen offen gelassen. Hierzu kann entweder gemäß der ersten Alternative zunächst ein Mittellinienpfadabschnitt definierter Länge berechnet werden und dann Abschlusslinien unter variierenden Kreuzungswinkeln definiert werden, auf denen jeweils Endpunkte für mögliche Randfaserpfadabschnitte und daraus die entsprechenden Randfaserpfadabschnitte berechnet werden, deren Längendifferenz wiederum zu minimieren ist. Idealerweise wird sich zu jedem möglichen Mittellinienpfadabschnitt eine Kombination aus möglichst rechtwinkligem Kreuzungswinkel und möglichst geringer Längendifferenz der Randfaser Pfadabschnitte ergeben.

Andererseits kann auch von den Randfaserpfadabschnitten ausgehend vorgegangen werden, wobei die Länge des zweiten Randfaserpfadabschnitts leicht variiert werden kann gegenüber der Länge des ersten Randfaserpfadabschnitts, wobei der Kreuzungswinkel der Abschlusslinie durch die Endpunkte der beiden Randfaserpfadabschnitte mit den beiden Randfaserpfadabschnitten oder dem Mittellinienpfadabschnitt wiederum mit minimiert wird. Dabei ist ein Optimum in der Kombination der beiden Werte, nämlich Kreuzungswinkel und Längendifferenz der Randfaserpfadabschnitte zu suchen.

In beiden Fällen ist es möglich, die jeweils erreichten lokalen Minima im Kreuzungswinkel und in der Längendifferenz zu vergleichen mit den bekannten Toleranzen des verwendeten Gurtmaterials bezüglich dieser beiden Variablen, so dass es durch diese Kombination in einigen Fällen auch möglich ist, Lösungen zu finden, die durch die ersten beiden Alternativen alleine nicht gefunden werden können. Dies hat seine Ursache darin, dass es in einigen Fällen ungünstiger ist, eine zu optimierende Variable bereits auf den optimalen Wert zu setzen, weil dies gegebenenfalls verhindert, dass in der anderen Variablen ein akzeptabler Wert erreicht werden kann. In vielen Fällen wird das Ergebnis der zuletzt genannten kombinierten Vorgehensweise daher zwischen den Ergebnissen der beiden zuerst genannten Alternativen liegen.

In sämtlichen Alternativen wird der gefundene spannungsoptimierte Pfad vorzugsweise nachträglich abschnittsweise seitlich so weit in Richtung zur Stegebene hin verschoben, bis die Stege in voller Länge auf dem Rotorblattgurt positionierbar sind, falls der gefundene spannungsoptimierte Pfad dies abschnittsweise nicht ermöglicht. Auch hierbei ist die intrinsische Steifigkeit des Gurtmaterials beim Ablegen in die Form zu berücksichtigen. Falls die seitliche Verschiebung von Abschnitten des spannungsoptimierten Pfades dazu führt, dass die Verzugstoleranz des Materials überschritten wird, ist der entsprechende spannungsoptimierte Pfad als ungeeignet zu verwerfen.

Vorteilhafterweise berechnet das iterative Berechnungsverfahren mögliche Pfade von variierenden globalen Startpunkten und/oder unter variierenden Startwinkeln, wobei aus der gefundenen Menge von möglichen Pfaden ein spannungsoptimierter Pfad ermittelt wird, der im Vergleich zu anderen möglichen Pfaden weniger oder am wenigsten Korrekturen zur Positionierung der Stege auf dem Rotorblattgurt erfordert.

Vorzugsweise wird die Form der Halbschale geändert, wenn das iterative Berechnungsverfahren zu keinem Ergebnis kommt, bei dem die Lagen des Faserverbundmaterials angesichts ihrer Steifigkeitseigenschaften faltenfrei und knickfrei entlang des spannungsoptimierten und gegebenenfalls lokal seitlich verschobenen Pfades in eine Form legbar sind. Solche Falten und Knicke treten auf, wenn die Verzugstoleranz des Gutmaterials überschritten worden ist.

Die der Erfindung zugrunde liegende Aufgabe wird auch durch ein Rotorblatt mit einem Rotorblattgurt, dessen Formgebung in einem zuvor beschriebenen erfindungsgemäßen Verfahren berechnet worden ist und der faltenfrei und knickfrei in einer Form für den Rotorblattgurt hergestellt oder herstellbar ist, gelöst, wobei die Mittellinie des Rotorblattgurts im Verlauf der Längsrichtung des Rotorblatts wenigstens abschnittsweise in sich verändernder Weise von der Stegebene abweicht. Damit ist ein erfindungsgemäß berechneter und hergestellter Rotorblattgurt von konventionell verlegten Rotorblattgurten zu unterscheiden, deren Mittellinie, also die geometrische Mitte zwischen den Vorderkanten und Hinterkanten des Rotorblattgurts, immer in der Stegebene verläuft und somit keinen variierenden Abstand zur Stegebene hat. Ein weiteres sichtbares Merkmal ist, dass der Überstand des Gurts in Bezug auf die Stege variiert.

Vorzugsweise umfasst die Lage oder umfassen die Lagen des Faserverbundmaterials eine oder mehrere Lagen aus nebeneinander angeordneten pultrudierten Stäben und/oder eine oder mehrere pultrudierte Lagen mit in ein aushärtbares oder ausgehärtetes Matrixmaterial eingebetteten unidirektionalen Fasern, insbesondere Glasfasern und/oder Carbonfasern, oder besteht oder bestehen aus diesen.

Die der Erfindung zugrunde liegende Aufgabe wird auch durch eine Windenergieanlage mit wenigstens einem zuvor beschriebenen erfindungsgemäßen Rotorblatt gelöst.

Erfindungsgegenstände, also das Verfahren, das Rotorblatt und die Windenergieanlage, weisen jeweils die zu den anderen Erfindungsgegenständen beschriebenen Vorteile, Merkmale und Eigenschaften auf.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung des Aufbaus eines Rotorblatts,
- Fig. 2: schematische Darstellungen der Gurtposition im Verlauf eines Rotorblatts,
- Fig. 3: eine schematische Darstellung eines von einer Stegebene abweichenden Verlaufs eines Rotorblattgurts,
- Fig. 4: eine schematische Darstellung einer ersten erfindungsgemäßen Alternative eines Gurtpositionsfindungsverfahrens,
- Fig. 5: eine schematische Darstellung einer zweiten erfindungsgemäßen Alternative eines Gurtpositionsfindungsverfahrens und
- Fig. 6: eine perspektivische Ansicht einer Rotorblatthalbschale mit Stegebene und spannungsoptimierter Gurtposition.

In den Zeichnungen sind jeweils gleiche oder gleichartige Elemente und/oder Teile mit denselben Bezugsziffern versehen, so dass von einer erneuten Vorstellung jeweils abgesehen wird.

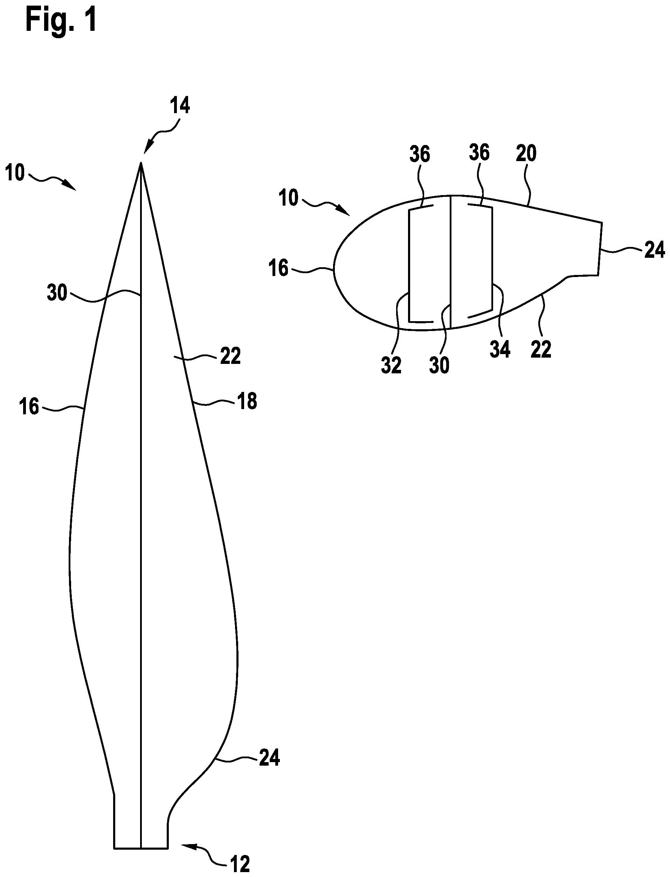

In Figur 1 ist der Aufbau eines Rotorblattes schematisch dargestellt. In der linken Bildhälfte ist eine Draufsicht auf eine Halbschale 22 einer Druckseite eines Rotorblattes 10 dargestellt, die sich von einer Rotorblattwurzel 12 bis zur Rotorblattspitze 14 erstreckt. Ebenfalls markiert sind eine Profilvorderkante 16 und eine Profilhinterkante 18. Die Profilhinterkante 18 geht im Bereich der Rotorblattwurzel 12 in eine stumpfe Hinterkante 24 über, da das eigentliche aerodynamische Profil strukturell an dieser Stelle nicht weiter geführt wird.

Das Rotorblatt 10 wird von der Rotorblattwurzel 12 bis zur Rotorblattspitze 14 von einer Stegebene 30 durchmessen, die senkrecht zur Blattebene verläuft und durch die gesamte Länge des Rotorblattes 10 gerade und ohne Verwindung ist.

In der rechten Bildhälfte der Figur 1 ist das Rotorblatt 10 im Querschnitt im Profil gezeigt. Es handelt sich um einen Querschnitt in der Nähe der Rotorblattwurzel 12. Das Profil erstreckt sich von einer Profilvorderkante 16 bis zur stumpfen Hinterkante 24 und umfasst 2 Halbschalen, nämlich eine Halbschale 20 der Saugseite und eine Halbschale 22 der Druckseite. Ebenfalls eingezeichnet ist die Stegebene 30. Um diese sind symmetrisch in Richtung zur Profilvorderkante 16 und zur stumpfen Hinterkante 24 zwei Stege 32, 34 angeordnet, die jeweils parallel zur Stegebene 30 ausgerichtet sind und Stegfüße 36 an ihren oberen und unteren Enden aufweisen, mit denen sie auf nicht dargestellte Rotorblattgurte geklebt und oder laminiert sind.

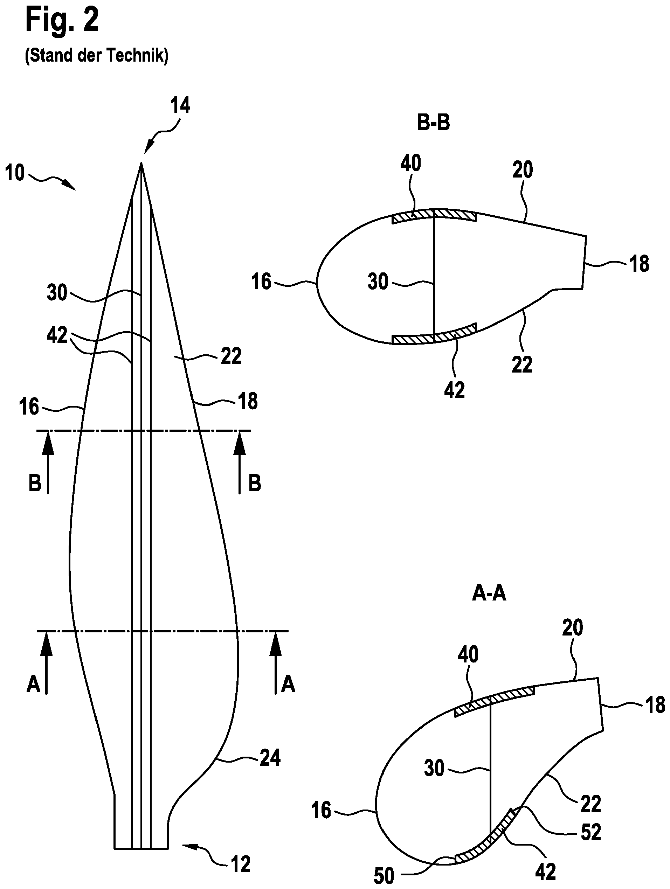

Figur 2 zeigt schematisch in der linken Hälfte wiederum eine Draufsicht auf eine schematisch dargestellte Halbschale 22 eines Rotorblattes 10, in die in bekannter Weise ein Rotorblattgurt 42 eingelegt ist, dessen Mittellinie auf der Stegebene 30 verläuft. In der rechten Bildhälfte sind 2 Profilschnitte entlang den Schnittebenen B-B und A-A dargestellt. Im unteren Bereich stellt der Schnitt A-A einen Schnitt im blattwurzelseitigen Bereich des Rotorblattes 10 dar. In diesem Bereich ist das Profil gegenüber dem äußeren Bereich zur Blattspitze 14 hin verwunden. In diesem Profilschnitt sind 2 Hauptgurte 40,42 für die Saugseite 20 und die Druckseite 22 des Rotorblattes 10 dargestellt, die mit ihrer Mitte jeweils auf der Stegebene 30 liegen. Wie insbesondere im unteren Bereich anhand des Hauptgurts 42 erkennbar ist, liegt der Hauptgurt 42 auf einer gekrümmten und relativ zur Stegebene 30 schief liegenden Fläche. Die Krümmung dieser Fläche führt dazu, dass die Gurtvorderkante 50 des Hauptgurts 42 weiter von der Stegebene 30 entfernt liegt als die Gurthinterkante 52, gerechnet als kürzester Abstand zur Stegebene 30. Senkrecht zur Stegebene 30 hat der Hauptgurt 40 an der Saugseite 20 damit eine in der Projektion größere Ausdehnung als der Hauptgurt 42 an der Druckseite 22.

In der im oberen Bereich der rechten Bildhälfte gezeigten Darstellung eines Profilschnitts entlang der Profilschnittebene B-B in einem weiter zur Rotorblattspitze 14 angeordneten Bereich des Rotorblattes 10 ist erkennbar, dass in diesem Bereich die Krümmung der Halbschalen 20, 22 weniger stark ist und die Rotorblattgurte 40, 42 mittlerweile im Wesentlichen senkrecht zur Stegebene 30 angeordnet sind. In diesem Bereich ist das Verlegen der Lagen, aus denen der Gurt hergestellt wird, einfacher als in dem stärker gekrümmten rotorblattwurzelseitigen Bereich. Es ist auch wesentlich einfacher, einen spannungsarmen oder spannungsfreien Verlauf zu finden.

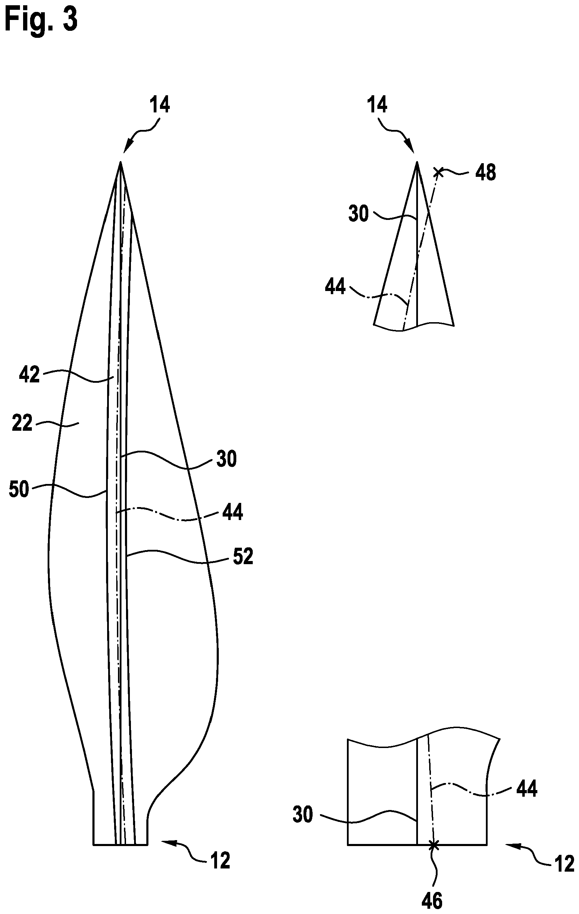

In Figur 3 ist schematisch eine mögliche Positionierung eines Rotorblattgurtes 42 in einer Halbschale 22 der Druckseite gezeigt, dessen Mittellinie 44 von der Stegebene 30 abweicht. Ebenfalls dargestellt sind die parallel zur Mittellinie 44 verlaufenden Gurtvorderkanten und Gurthinterkanten 50, 52. Wie dies in der linken Bildhälfte erkennbar ist, beschreiben diese kennzeichnenden Linien des Hauptgurtes 42 einen Bogen, der die kürzeste Strecke oder Geodäte auf der Oberfläche darstellt. Wie in der rechten Bildhälfte in Ausschnittsvergrößerungen erkennbar ist, liegen der Startpunkt 46 und der Endpunkt 48 der Mittellinie 44 des Hauptgurtes 42 in diesem Fall nicht mehr auf der Stegebene 30. Die Mittellinie 44 kreuzt auch an zwei Stellen die Stegebene 30. Auch diese kürzeste Verbindung zwischen Rotorblattwurzel 12 und Rotorblattspitze 14 ist aber nicht notwendigerweise spannungsarm.

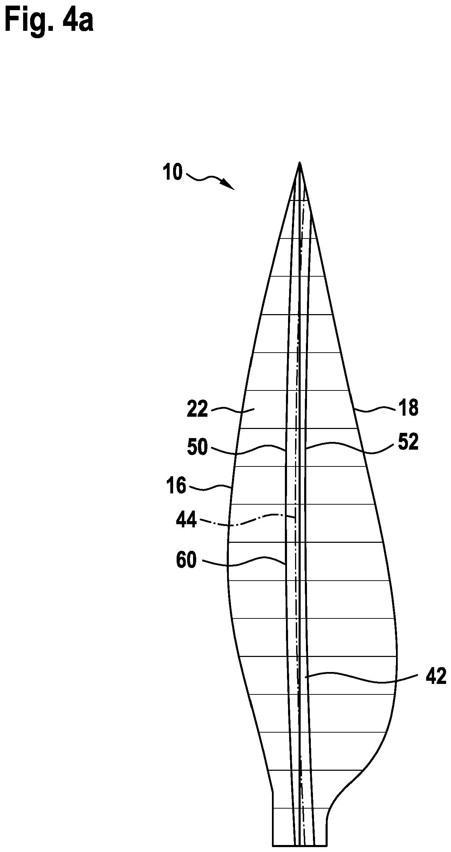

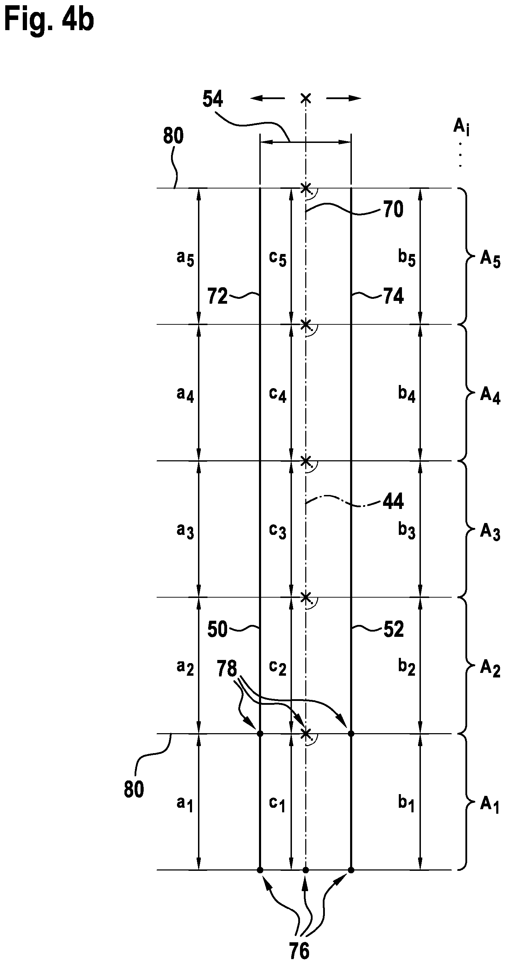

In Figur 4 ist eine erste Alternative eines erfindungsgemäßen Verfahrens zur Bestimmung einer Positionierung eines Rotorblattgurtes 60 in einer Halbschale 22 eines Rotorblattes 10 illustriert. Figur 4a) stellt den Verlauf des spannungsoptimierten Gurtes 60 in Längserstreckung des Rotorblattes 10 mit Querstrichen dar, die einen lokalen Verzug des Gurtmaterials darstellen. In diesem Fall laufen die Querstriche jeweils senkrecht zum lokalen Verlauf der Mittellinie 44.

Das iterative Verfahren in dieser Alternative ist in Figur 4b) dargestellt. Der Verlauf des Gurtes 42 ist in Pfadabschnitte *Aᵢ* unterteilt, von denen fünf Abschnitte *A₁* bis *A₅* dargestellt sind. In jedem Pfadabschnitt *Aᵢ* wird der Gurt 42 durch einen Mittellinienpfadabschnitt *cᵢ* sowie Randfaserpfadabschnitte *aᵢ, bᵢ* repräsentiert, die mit der Breite 54 des Hauptgurtes 42 parallel zueinander verlaufen. In jedem Pfadabschnitt *Aᵢ* beginnen die Pfadabschnitte *aᵢ, bᵢ, cᵢ* jeweils in einem Startpunkt 76 und enden in einem Endpunkt 78, der jeweils für den entsprechenden Abschnitt der folgenden Iterationsstufe zum Startpunkt 76 wird. Durch die Endpunkte 78 der Pfadabschnitte *aᵢ, bᵢ, cᵢ* verläuft eine Abschlusslinie 80. So ergibt sich ein Muster, das analog zu den Kettfäden und Schussfäden eines gewebten Gewebes ist.

In der in Figur 4b) gezeigten Alternative des erfindungsgemäßen Verfahrens wird jeweils von einem lokalen Startpunkt 76 ausgehend ein Mittellinienpfadabschnitt *cᵢ* gesucht, der eine definierte Länge *Lᵢ* hat. Anschließend wird durch den Endpunkt 78 dieses gefundenen Mittellinienpfadabschnitts *cᵢ* die Abschlusslinie 80 unter der Maßgabe berechnet, dass diese senkrecht zum Mittellinienpfadabschnitt *cᵢ* verläuft. Auf der Abschlusslinie 80 werden anschließend unter den bekannten Abständen entsprechend der Gurtbreite 54 Endpunkte 78 für die Randfaserpfadabschnitte *aᵢ, bᵢ* markiert, und die Randfaserpfadabschnitte *aᵢ, bᵢ* zwischen ihren aktuellen Startpunkten 76 und Endpunkten 78 berechnet. Aufgrund der Krümmung der Oberfläche der Halbschale 22 wird die Länge der Randfaserpfadabschnitte *aᵢ, bᵢ* sich in den meisten Fällen unterscheiden. Diese Längendifferenz wird für einen möglichst spannungsarmen Gurtverlauf minimiert. Dazu wird in jedem Iterationsschritt eine Vielzahl möglicher Gurtabschnittsverläufe berechnet und derjenige Gurtabschnittsverlauf ausgewählt, bei dem die Längendifferenz der Randfaserpfadabschnitte *aᵢ, bᵢ* minimal ist. Dieses Verfahren unterstellt eine Dehnbarkeit oder Stauchbarkeit des Materials und unterdrückt Verschiebungen benachbarter Fasern des Gurtmaterials in Längsrichtung relativ zueinander.

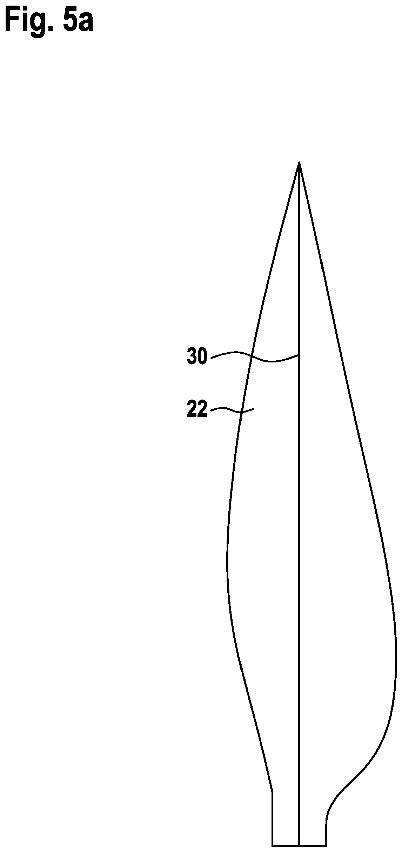

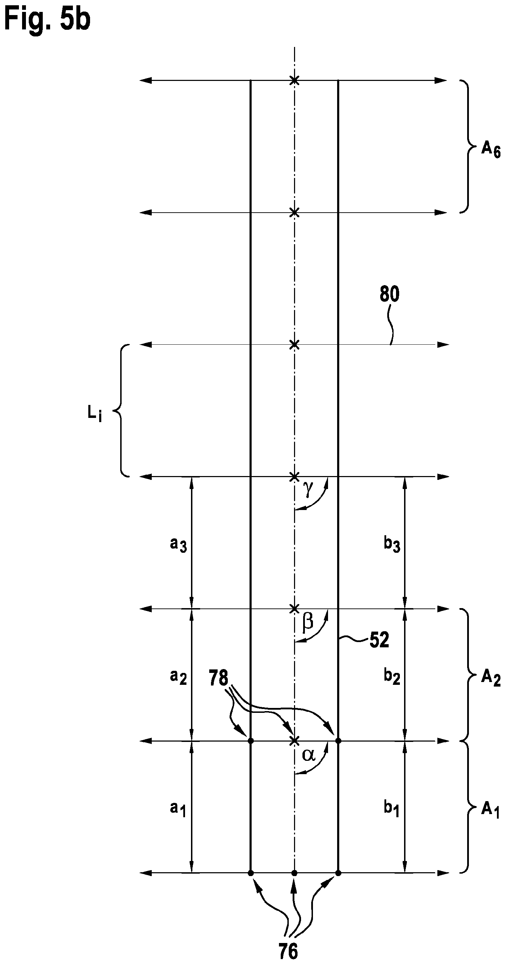

Figur 5 zeigt das alternative Verfahren, wobei in Figur 5a) wiederum eine Rotorblatthalbschale 22 mit einer Stegebene gezeigt ist, wobei in Figur 5b) eine Struktur wie in Figur 4b) gezeigt ist, die das alternative iterative Verfahren illustriert. In diesem Fall werden in jedem Iterationsschritt zunächst die Randfaserpfadabschnitte *aᵢ, bᵢ* bestimmt mit der Randbedingung, dass die Länge der Randfaserpfadabschnitte *aᵢ, bᵢ* untereinander gleich ist. Damit wird als Randbedingung festgelegt, dass die Fasern des Gurtmaterials quasi inkompressibel und nicht dehnbar sind. Es ergeben sich jeweils wieder Endpunkte 78, durch die jeweils eine Abschlusslinie 80 gezogen wird. Der Kreuzungswinkel der Abschlusslinie 80 mit den Randfaserpfadabschnitten *aᵢ, bᵢ* sowie dem Mittellinienpfadabschnitt *cᵢ* ist dabei von dem Verlauf des Pfades abhängig und nicht auf 90° festgelegt. Er kann von Iterationsschritt zu Iterationsschritt variieren (α, β, γ, ...) und ist jeweils ein Auswahlkriterium zwischen verschiedenen möglichen Pfadabschnitten, wobei derjenige mögliche Pfadabschnitt gewählt wird, bei dem der Kreuzungswinkel am nächsten bei 90° liegt.

In den in den Figuren 4 und 5 gezeigten alternativen Verfahren wird somit jeweils der Kreuzungswinkel und die Längendifferenz der Randfaserpfadabschnitte minimiert, wobei jeweils eine der beiden Variablen aufgrund der Art der Bildung der möglichen Pfadabschnitte bereits auf den Optimalwert gelegt wird. Ein optimaler Kreuzungswinkel von 90° mit gleichzeitig verschwindender Längendifferenz der Randfaserpfadabschnitte bedeutet einen optimalen verzuglosen Gurt. Dies ist in der Praxis nicht zu erreichen. Die beiden alternativen Verfahren werden aufgrund ihrer leicht unterschiedlichen Herangehensweise zu leicht unterschiedlichen Ergebnissen kommen.

Ein in Einzelfällen noch besseres Ergebnis wird unter Umständen erreicht, wenn beide Variablen als Optimierungsvariablen verwendet werden und nicht bereits in der Berechnung der möglichen Pfadabschnitte festgelegt werden. Dies kann gemäß der ersten Alternative aus Figur 4 so erfolgen, dass eine Variation des Kreuzungswinkels der Abschlusslinie 80 mit dem zunächst gebildeten Mittellinienpfadabschnitt *cᵢ* um 90° herum zugelassen wird und somit in einem 2-dimensionalen Parameterraum eine Annäherung an einen Minimalverzug vorgenommen wird. Umgekehrt kann das in Figur 5 dargestellte Verfahren verwendet werden, bei dem die Längendifferenz zwischen den beiden zunächst gebildeten Randfaserpfadabschnitten *aᵢ, bᵢ* dadurch etwas variiert wird, dass der als zweites gebildete Randfaserpfadabschnitt in seiner Länge variiert wird, und zwar kürzer und länger gemacht wird als der zuerst gebildete Randfaserpfadabschnitt. Auch hierdurch verändert sich der Kreuzungswinkel der Abschlusslinie 80 mit den in Längsrichtung des Gurtes verlaufenden Fasern, sodass sich wiederum eine zweidimensionale Optimierung ergibt.

Die zweidimensionale Optimierung hat den weiteren Vorteil, dass Lösungen möglich werden, die mit einem eindimensionalen Optimierungsverfahren gemäß den ersten beiden Alternativen nicht auffindbar sind, weil der Zwang, eine der beiden Optimierungsvariablen bereits fix auf dem optimalen Wert zu halten, dazu führen kann, dass in der anderen Variable keine Lösung auffindbar ist, die mit den Gegebenheiten der Materialsteifigkeit des Gutmaterials vereinbar sind. Es erhöht sich bei der zweidimensionalen Optimierung allerdings der Rechenaufwand.

Bei der Berechnung kann der globale Startpunkt an der Rotorblattwurzel 12 oder der Rotorblattspitze 14 liegen und es können verschiedene Startpunkte, die dicht beieinander liegen, als Ausgangspunkte des iterativen Berechnungsverfahren verwendet werden. Von jedem der Standpunkte wird eine Lösung generiert werden, die miteinander verglichen werden können, und aus denen ein optimierter Pfad ausgewählt wird. Eine Randbedingung hierbei ist, dass, gegebenenfalls unter Verschieben des Gurtes in Profiltiefenrichtung, der gewählte Pfad es ermöglicht, dass die Stege 32,34 auch auf dem Gurt 40,42 tatsächlich angebracht werden können.

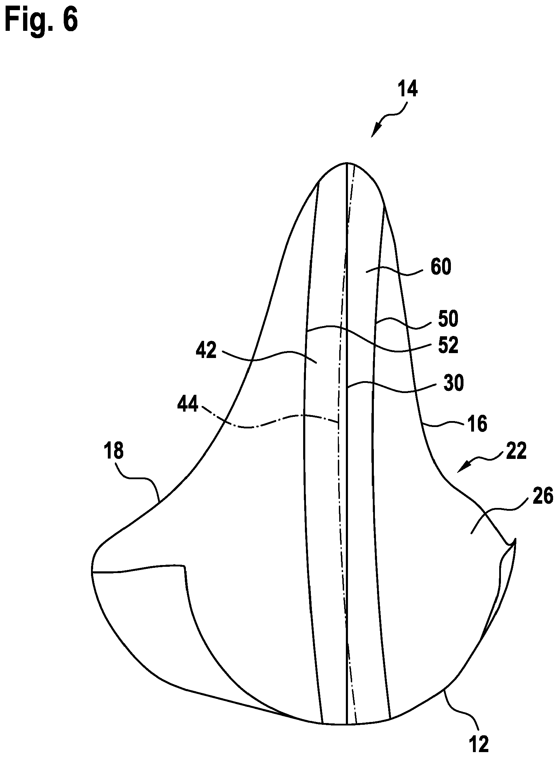

Figur 6 zeigt schematisch einen perspektivischen Blick von der Rotorblattwurzel 12 in die Halbschale 22 der Saugseite eines Rotorblattes 10. Die Profilvorderkante 16 ist im Bild rechts dargestellt, die Profilhinterkante 18 links. Die Stegebene 30 ist in gerader Linie von der Mitte der Rotorblattwurzel 12 zur Rotorblattspitze 14 eingezeichnet. Ebenfalls eingezeichnet sind eine Mittellinie 44 sowie Vorderkante 50 und Hinterkante 52 eines Rotorblattgurtes 42, dessen Verlauf in einem erfindungsgemäßen Verfahren berechnet worden ist. Es ist deutlich erkennbar, dass der Rotorblattgurt 42 mit seiner Mittellinie 44 deutlich von der Stegebene 30 abweicht, und zwar in Richtung zur Vorderkante 52 im wurzelseitigen Bereich und zur Hinterkante 52 im blattspitzenseitigen Bereich.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezuaszeichenliste

- 10: Rotorblatt
- 12: Rotorblattwurzel
- 14: Rotorblattspitze
- 16: Profilvorderkante
- 18: Profilhinterkante
- 20: Halbschale der Saugseite
- 22: Halbschale der Druckseite
- 24: stumpfe Hinterkante
- 26: gekrümmte Innenfläche der Halbschale
- 30: Stegebene
- 32, 34: Steg
- 36: Stegfuß
- 40: Hauptgurt der Saugseite
- 42: Hauptgurt der Druckseite
- 44: Mittellinie des Rotorblattgurts
- 46: Startpunkt
- 48: Endpunkt
- 50: Gurtvorderkante
- 52: Gurthinterkante
- 54: Gurtbreite
- 60: Rotorblattgurt in optimierter Position
- 70: Mittellinienpfadabschnitt
- 72, 74: Randfaserpfadabschnitt
- 76: Startpunkte
- 78: Endpunkte
- 80: Abschlusslinie

## Patentansprüche

1. Verfahren zur Bestimmung einer Positionierung eines Rotorblattgurtes (40, 42, 60) aus einem faserverstärkten Material in einer Halbschale (20, 22) eines Rotorblatts (10), das sich in einer Längsrichtung von einer Rotorblattwurzel (12) zu einer Rotorblattspitze (14) erstreckt, wobei der Rotorblattgurt (40, 42, 60) aus einer Lage oder mehreren Lagen eines eine Steifigkeit aufweisenden Faserverbundmaterials in einer Form hergestellt wird, die einer gekrümmten Innenfläche (26) einer Halbschale (20, 22) des Rotorblatts (10) entspricht, und anschließend in die Halbschale (20, 22) eingelegt und mit der Innenfläche (26) der Halbschale (20, 22) verbunden wird, wobei anschließend Stege (32, 34) symmetrisch um eine sich in der Längsrichtung des Rotorblatts (10) erstreckende und die Halbschale (20, 22) schneidende, insbesondere über eine gesamte Länge des Rotorblatts (10) flache und unverwundene, Stegebene (30) auf dem Rotorblattgurt (40, 42, 60) positioniert und mit dem Rotorblattgurt (40, 42, 60) verbunden werden, **dadurch gekennzeichnet, dass** in einem iterativen Berechnungsverfahren über eine volle Länge oder einen Teilabschnitt des Rotorblatts (10) eine angesichts einer gegebenen Steifigkeit des Materials des Rotorblattgurtes (40, 42, 60) gegen Verzug spannungsoptimierte Positionierung des Rotorblattgurtes (40, 42, 60) in der Halbschale (20, 22) in Form eines spannungsoptimierten Pfades entlang der gekrümmten Innenfläche (26) der Halbschale (20, 22) berechnet wird.

2. Verfahren nach Anspruch 1, **dadurch gekennzeichnet, dass** ein möglicher spannungsoptimierter Pfad des Rotorblattgurts (40, 42, 60) mit einem globalen Startpunkt und einem Startwinkel zur Stegebene (30) beginnt, wobei die Berechnung des Pfades iterativ in aufeinander folgenden Pfadabschnitten *Aᵢ* mit jeweils vordefinierter oder berechneter Pfadabschnittslänge *Lᵢ* in Richtung auf einen in einem letzten Iterationsschritt zu bestimmenden globalen Endpunkt hin fortschreitet, wobei ein Mittellinienpfad c und zwei Randfaserpfade a, b gebildet werden, die entlang der Innenfläche (26) der Halbschale (20, 22) verlaufen und die geometrische Mittellinie (44) und die Vorderkante (50) und Hinterkante (52) des Rotorblattgurts (40, 42, 60) repräsentieren, wobei die Randfaserpfade a, *b* zu beiden Seiten in einem vorbestimmten seitlichen Abstand auf der gekrümmten Innenfläche (26) der Halbschale (20, 22) vom Mittellinienpfad c verlaufen, wobei lokale Endpunkte (78) des Mittellinienpfadabschnitts *cᵢ* (70) und/oder der Randfaserpfadabschnitte *aᵢ, bᵢ* (72, 74), die in einem iterativen Schritt *i* errechnet worden sind, im jeweils darauf folgenden iterativen Schritt *i*+1 als lokale Startpunkte (76) verwendet werden, wobei als Randbedingung genommen wird, dass die Pfadabschnitte *a*_{*i*+}*₁, b*_{*i*+}*₁, c*_{*i*+*1*} (70, 72, 74) im lokalen Startpunkt (76) jeweils stetig und ohne Knick an die Pfadabschnitte *aᵢ, bᵢ, cᵢ* (70, 72, 74) anschließen.

3. Verfahren nach Anspruch 2, **dadurch gekennzeichnet, dass** die Pfadabschnittslänge *Lᵢ* im Verlaufe der Iteration für jeden folgenden Pfadabschnitt *Aᵢ* als Funktion der anstehenden Krümmung der Innenfläche (26) der Halbschale (20, 22) berechnet wird, wobei in Bereichen stärkerer Krümmung die Pfadabschnittslänge *Lᵢ* kürzer gewählt wird als in Bereichen mit geringerer Krümmung.

4. Verfahren nach Anspruch 2 oder 3, **dadurch gekennzeichnet, dass** in jedem Iterationschritt des iterativen Verfahrens lokal ein Verzug des Gurtmaterials minimiert wird, wobei insbesondere eine Stauchung oder Streckung der Vorderkante und/oder Hinterkante des Gurtmaterials und/oder eine Längsverschiebung benachbarter Fasern im Gurtmaterial relativ zueinander minimiert wird oder werden.

5. Verfahren nach einem der Ansprüche 2 bis 4, **dadurch gekennzeichnet, dass** in jedem iterativen Schritt *i*, ausgehend vom lokalen Startpunkt (76) der Mittellinie *c* (44), ein spannungsoptimierter Pfadabschnitt *A_{i,opt}* aus einer Menge möglicher Pfadabschnitte *Aᵢ* berechnet wird, die ihrerseits ermittelt werden, indem mögliche Mittellinienpfadabschnitte *cᵢ* (70) der Pfadabschnittslänge *Lᵢ* mit möglichen lokalen Endpunkten (78) ermittelt werden, wobei zu jedem möglichen Mittellinienpfadabschnitt *cᵢ* (70) zunächst eine Abschlusslinie (80) entlang der Innenfläche (26) der Halbschale (20, 22) ermittelt wird, die rechtwinklig zum jeweiligen möglichen Mittellinienpfadabschnitt *cᵢ* (70) durch dessen lokalen Endpunkt (78) verläuft, wobei anschließend Randfaserpfadabschnitte *aᵢ, bᵢ* (72, 74) ermittelt werden, indem auf der ermittelten Abschlusslinie (80) im vorbestimmten seitlichen Abstand zum Endpunkt (78) des möglichen Mittellinienpfadabschnitts *cᵢ* (70) entsprechende Endpunkte (78) von Randfaserpfadabschnitten *aᵢ, bᵢ* (72, 74) festgelegt werden und anschließend Randfaserpfadabschnitte *aᵢ, bᵢ* (72, 74) zwischen den lokalen (76) Startpunkten und Endpunkten (78) der Randfaserpfadabschnitte *aᵢ, bᵢ* (72, 74) berechnet werden, die jeweils den vorbestimmten seitlichen Abstand zum möglichen Mittellinienpfadabschnitt *cᵢ* (70) haben, wobei anschließend aus den ermittelten möglichen Pfadabschnitten *Aᵢ* ein spannungsoptimierter Pfadabschnitt *A_{i,opt}* ermittelt wird, bei dem eine Differenz der Längen beider Randfaserpfadabschnitte *aᵢ, bᵢ* (72, 74) im Pfadabschnitt *A_{i,opt}* kleiner ist als bei anderen möglichen Pfadabschnitten *Aᵢ*, insbesondere minimal ist.

6. Verfahren nach einem der Ansprüche 2 bis 4, **dadurch gekennzeichnet, dass** in jedem iterativen Schritt *i*, ausgehend von den lokalen Startpunkten (76) der Randfaserpfadabschnitte *aᵢ, bᵢ* (72, 74), mögliche Paare gleich langer Randfaserpfadabschnitte *aᵢ, bᵢ* (72, 74) ermittelt werden, deren Abstand auf der gekrümmten Innenfläche (26) der Halbschale (20, 22) der Breite (54) des entsprechend geführten Rotorblattgurtes (60) entspricht, wobei anschließend aus den ermittelten möglichen Paaren von Randfaserpfadabschnitten *aᵢ, bᵢ* (72, 74) ein spannungsoptimierter Pfadabschnitt *A_{i,opt}* ermittelt wird, bei dem ein Betrag eines Kreuzungswinkels zwischen einer durch lokale Endpunkte (78) der Randfaserpfadabschnitte *aᵢ, bᵢ* (72, 74) führenden Abschlusslinie und einem Randfaserpfadabschnitt *aᵢ, bᵢ* (72, 74) oder einem zwischen den Randfaserpfadabschnitten *aᵢ, bᵢ* (72, 74) liegenden Mittellinienpfadabschnitt *cᵢ* (70) weniger von 90° abweicht als bei anderen möglichen Paaren, insbesondere gleich 90° ist.

7. Verfahren nach einem der Ansprüche 1 bis 6, **dadurch gekennzeichnet, dass** der gefundene spannungsoptimierte Pfad nachträglich abschnittsweise seitlich so weit in Richtung zur Stegebene (30) hin verschoben wird, bis die Stege (32, 34) in voller Länge auf dem Rotorblattgurt (40, 42, 60) positionierbar sind, falls der gefundene spannungsoptimierte Pfad dies abschnittsweise nicht ermöglicht.

8. Verfahren nach einem der Ansprüche 1 bis 7, **dadurch gekennzeichnet, dass** das iterative Berechnungsverfahren mögliche Pfade von variierenden globalen Startpunkten und/oder unter variierenden Startwinkeln berechnet und aus der gefundenen Menge von möglichen Pfaden ein spannungsoptimierter Pfad ermittelt wird, der im Vergleich zu anderen möglichen Pfaden weniger oder am wenigsten Korrekturen zur Positionierung der Stege (32, 34) auf dem Rotorblattgurt (40, 42, 60) erfordert.

9. Verfahren nach einem der Ansprüche 1 bis 8, **dadurch gekennzeichnet, dass** die Form der Halbschale (20, 22) geändert wird, wenn das iterative Berechnungsverfahren zu keinem Ergebnis kommt, bei dem die Lagen des Faserverbundmaterials angesichts ihrer Steifigkeitseigenschaften faltenfrei und knickfrei entlang des spannungsoptimierten und gegebenenfalls lokal seitlich verschobenen Pfades in eine Form legbar sind.

10. Rotorblatt (10) mit einem Rotorblattgurt (60), dessen Formgebung in einem Verfahren gemäß einem der Ansprüche 1 bis 9 berechnet worden ist und der faltenfrei und knickfrei in einer Form für den Rotorblattgurt (60) hergestellt oder herstellbar ist, wobei die Mittellinie (44) des Rotorblattgurts (60) im Verlauf der Längsrichtung des Rotorblatts (10) wenigstens abschnittsweise in sich verändernder Weise von der Stegebene (30) abweicht.

11. Rotorblatt (10) nach Anspruch 10, **dadurch gekennzeichnet, dass** die Lage oder die Lagen des Faserverbundmaterials eine oder mehrere Lagen aus nebeneinander angeordneten pultrudierten Stäben und/oder eine oder mehrere pultrudierte Lagen mit in ein aushärtbares oder ausgehärtetes Matrixmaterial eingebetteten unidirektionalen Fasern, insbesondere Glasfasern und/oder Carbonfasern, umfasst oder umfassen oder aus diesen besteht oder bestehen.

12. Windenergieanlage mit wenigstens einem Rotorblatt (10) nach Anspruch 11.

## Claims

1. A method of determining a positioning of a rotor blade belt (40, 42, 60) made from a fiber-reinforced material in a half shell (20, 22) of a rotor blade (10) which extends in a longitudinal direction from a rotor blade root (12) to a rotor blade tip (14), wherein the rotor blade belt (40, 42, 60) is produced, from one layer or several layers of a fiber composite material having a stiffness, in a mold which corresponds to a curved interior surface (26) of a half shell (20, 22) of the rotor blade (10) and which is subsequently placed in the half shell (20, 22) and connected to the interior surface (26) of the half shell (20, 22), wherein ribs (32, 34) are subsequently positioned symmetrically around a rib plane (30) on the rotor blade belt (40, 42, 60), which rib plane extends in the longitudinal direction of the rotor blade (10) and intersects the half shell (20, 22) and which is flat and non-distorted, in particular over the entire length of the rotor blade (10), and are connected to the rotor blade belt (40, 42, 60), **characterized in that**, in an iterative calculation method, a positioning of the rotor blade belt (40, 42, 60) within the half shell (20, 22), optimized as regards tension in view of a given stiffness of the material of the rotor blade belt (40, 42, 60) against distortion, is calculated in the form of a path along the curved inner surface (26) of the half shell (20, 22), which path has been optimized in terms of tension, over an entire length or a portion of the rotor blade (10).

2. The method according to claim 1, **characterized in that** a possible path of the rotor blade belt (40, 42, 60), which is optimized in terms of tension, starts with a global starting point and a starting angle with respect to the rib plane (30), wherein the calculation of the path proceeds iteratively in successive path portions Aᵢ, each having a predefined or calculated path portion length Lᵢ in a direction towards a global end point, which is to be determined in a last iteration step, wherein a midline path c and two edge fiber paths a, b are formed, which run along the inner surface (26) of the half shell (20, 22) and which represent the geometric midline (44) and the front edge (50) and the rear edge (52) of the rotor blade belt (40, 42, 60), wherein the edge fiber paths a, b run at a predetermined lateral distance on both sides with respect to the midline path c on the curved inner surface (26) of the half shell (20, 22), wherein local end points (78) of the midline path portion cᵢ (70) and/or of the edge fiber path portions aᵢ, bᵢ (72, 74), which have been calculated in an iterative step i, are respectively used in the subsequent iterative step i + 1 as local starting points (76), wherein it is assumed as a boundary condition that the path portions aᵢ₊₁, bᵢ₊₁, cᵢ₊₁ (70, 72, 74) respectively join onto the path portions aᵢ, bᵢ, cᵢ (70, 72, 74) at a local starting point (76) in a continuous manner and without bend.

3. The method according to claim 2, **characterized in that**, during the course of the iteration, for each subsequent path portion Aᵢ, the path portion length Lᵢ is calculated as a function of the upcoming curvature of the inner surface (26) of the half shell (20, 22), wherein, in areas of greater curvature, the path portion length Lᵢ is chosen shorter than in areas having a smaller curvature.

4. The method according to claim 2 or 3, **characterized in that**, in each iteration step of the iterative method, a distortion of the belt material is minimized locally, wherein in particular a compression or elongation of the front edge and/or the rear edge of the belt material and/or a translation of adjacent fibers in the belt material relative to each other in a longitudinal direction is or are minimized.

5. The method according to any one of the claims 2 to 4, **characterized in that** in each iterative step i, starting from a local starting point (76) of the mid line c (44), a path portion A_{i, opt}, which is optimized in terms of tension, is calculated from a set of possible path portions Aᵢ, which in turn are determined by determining possible midline path portions cᵢ (70) of the path length Lᵢ with possible local end points (78), wherein for each possible midline path portion cᵢ (70) initially a termination line (80) along the inner surface (26) of the half shell (20, 22) is determined, which runs at right angle with respect to the respective possible midline path portion cᵢ (70) through its respective local end point (78), wherein subsequently edge fiber path portions aᵢ, bᵢ (72, 74) are determined by setting respective end points (78) of edge fiber path portions aᵢ, bᵢ (72, 74) on the determined termination line (80) in the predetermined lateral distance to the end point (78) of the possible midline path portion cᵢ (70) and subsequently calculating edge fiber path portions aᵢ, bᵢ (72, 74) between the local (76) starting points and end points (78) of the edge fiber path portions aᵢ, bᵢ (72, 74), which respectively have the predetermined lateral distance to the possible midline path portion cᵢ (70), wherein subsequently a path portion A_{i, opt}, which is optimized as regards tension, is determined from the determined possible path portions Aᵢ, for which path portion A_{i, opt} a difference of the lengths of the two edge fiber path portions aᵢ, bᵢ (72, 74) in the path portion A_{i, opt} is smaller than for other possible path portions Aᵢ, and in particular is minimized.

6. The method according to any one of the claims 2 to 4, **characterized in that**, in each iterative step i, starting from the local starting points (76) of the edge fiber path portions aᵢ, bᵢ (72, 74), possible pairs of edge fiber path portions aᵢ, bᵢ (72, 74) of equal length are determined, whose distance on the curved inner surface (26) of the half shell (20, 22) corresponds to the width (54) of the correspondingly guided rotor blade belt (60), wherein subsequently a path portion A_{i, opt}, which is optimized as regards tension and for which an absolute value of a crossing angle between a termination line running through local end points (78) of the edge fiber path portions aᵢ, bᵢ (72, 74) and an edge fiber path portion aᵢ, bᵢ (72, 74) or a midline path portion cᵢ (70) situated between the edge fiber path portions aᵢ, bᵢ (72, 74), deviates less from an angle of 90° than for other possible pairs, in particular is equal to 90°, is determined from the determined possible pairs of edge fiber path portions aᵢ, bᵢ (72, 74).

7. The method according to any one of the claims 1 to 6, **characterized in that** the path, which has been found and which is optimized as regards tension, is subsequently shifted laterally, in sections, towards the rib plane (30) until the ribs (32, 34) can be positioned on the rotor blade belt (40, 42, 60) over their entire length, in case this is not possible, in sections, for the path which has been found and which is optimized as regards tension.

8. The method according to any one of the claims 1 to 7, **characterized in that** the iterative calculation method calculates possible paths from varying global starting points and/or using varying starting angles and that, among the set of possible paths which have been found, a path which is optimized as regards tension is determined, which requires fewer or the least number of corrections for the purpose of positioning the ribs (32, 34) on the rotor blade belt (40, 42, 60) when compared with other possible paths.

9. The method according to any one of the claims 1 to 8, **characterized in that** the shape of the half shell (20, 22) is changed if the iterative calculation method does not arrive at a result for which the layers of the fiber composite material, bearing in mind its stiffness properties, can be placed without creases and sharp bends in a form along the path which is optimized as regards tension and which, locally, has been shifted laterally as necessary.

10. A rotor blade (10) with a rotor blade belt (60), whose shape has been calculated according to a method according to any one of the claims 1 to 9 and which has been manufactured or can be manufactured without creases and without sharp bends in a form for the rotor blade belt (60), wherein the mid line (44) of the rotor blade belt (60) deviates from the rib plane (30) in a varying manner at least in sections along the lengthwise direction of the rotor blade (10).

11. The rotor blade (10) according to claim 10, **characterized in that** the layer or the layers of the fiber composite material comprises or comprise one or several layers of pultruded rods arranged side by side and/or one or more pultruded layers with unidirectional fibers, in particular glass fibers and/or carbon fibers, which are embedded in a curable or cured matrix material, or consists or consist thereof.

12. A wind energy installation with at least one rotor blade (10) according to claim 11.

## Revendications

1. Procédé servant à définir un positionnement d'une semelle de longeron de pale de rotor (40, 42, 60) composée d'un matériau renforcé par des fibres dans une demi-coque (20, 22) d'une pale de rotor (10), qui s'étend dans une direction longitudinale depuis une racine de pale de rotor (12) vers une pointe de pale de rotor (14), dans lequel la semelle de longeron de pale de rotor (40, 42, 60) est fabriquée à partir d'une couche ou de plusieurs couches d'un matériau composite à base de fibres présentant une rigidité dans un moule, qui correspond à une surface intérieure (26) incurvée d'une demi-coque (20, 22) de la pale de rotor (10), et est placée immédiatement après dans la demi-coque (20, 22) et est reliée à la surface intérieure (26) de la demi-coque (20, 22), dans lequel des entretoises (32, 34) sont immédiatement après positionnées sur la semelle de longeron de pale de rotor (40, 42, 60) de manière symétrique autour d'un plan d'entretoise (30) s'étendant dans la direction longitudinale de la pale de rotor (10) et coupant la demi-coque (20, 22), en particulier plat et non vrillé sur une longueur totale de la pale de rotor (10) et sont reliées à la semelle de longeron de pale de rotor (40, 42, 60), **caractérisé en ce qu'**un positionnement de la semelle de longeron de pale de rotor (40, 42, 60) dans la demi-coque (20, 22) optimisé en matière de tension pour empêcher toute déformation compte tenu d'une rigidité donnée du matériau de la semelle de longeron de pale de rotor (40, 42, 60) est calculé sous la forme d'un chemin optimisé en matière de tension le long de la surface intérieure (26) incurvée de la demi-coque (20, 22) lors d'un procédé de calcul itératif sur une longueur totale ou un tronçon partiel de la pale de rotor (10) .

2. Procédé selon la revendication 1, **caractérisé en ce qu'**un chemin possible optimisé en matière de tension de la semelle de longeron de pale de rotor (40, 42, 60) commence avec un point de départ global et un angle de démarrage par rapport au plan d'entretoise (30), dans lequel le calcul du chemin se déroule de manière itérative dans des tronçons de chemin Aᵢ se suivant les uns les autres avec respectivement une longueur de tronçon de chemin Lᵢ définie ou calculée en direction d'un point final global à définir lors d'une dernière étape d'itération, dans lequel un chemin de ligne médiane c et deux chemins à base de fibres marginales a, b sont formés, qui s'étendent le long de la surface intérieure (26) des demi-coques (20, 22) et qui représentent la ligne médiane (44) géométrique et l'arête avant (50) et l'arête arrière (52) de la semelle de longeron de pale de rotor (40, 42, 60), dans lequel les chemins à base de fibres marginales a, b s'étendent des deux côtés à une distance latérale prédéfinie sur la surface intérieure (26) incurvée des demi-coques (20, 22) par rapport au chemin de ligne médiane c, dans lequel des points finaux (78) locaux du tronçon de chemin de ligne médiane cᵢ (70) et/ou des tronçons de chemins de fibres marginales aᵢ, bᵢ (72, 74), qui ont été calculés lors d'une étape itérative i, sont utilisés en tant que points de démarrage (76) locaux lors de l'étape itérative respectivement consécutive i+1, dans lequel on suppose en tant que condition marginale que les tronçons de chemin aᵢ₊₁, bᵢ₊₁, cᵢ₊₁ (70, 72, 74) se raccordent aux tronçons de chemin aᵢ, bᵢ, cᵢ (70, 72, 74) respectivement systématiquement et sans pli dans le point de démarrage (76) local.

3. Procédé selon la revendication 2, **caractérisé en ce que** la longueur de tronçon de chemin Li est calculée au cours de l'itération pour chaque tronçon de chemin Ai qui suit en tant que fonction de l'incurvation imminente de la surface intérieure (26) des demi-coques (20, 22), dans lequel la longueur de tronçon de chemin Lᵢ est choisie plus courte dans des zones à incurvation plus forte que dans des zones à incurvation plus modérée.

4. Procédé selon la revendication 2 ou 3, **caractérisé en ce qu'**une déformation du matériau de semelle de longeron est minimisée localement lors de chaque étape d'itération du procédé itératif, dans lequel en particulier un tassement ou un étirage de l'arête avant et/ou de l'arête arrière du matériau de semelle de longeron et/ou un coulissement longitudinal de fibres adjacentes est ou sont minimisés dans le matériau de semelle de longeron les uns par rapport aux autres.

5. Procédé selon l'une quelconque des revendications 2 à 4, **caractérisé en ce que** lors de chaque étape i itérative, un tronçon de chemin A_{i,opt} optimisé en matière de tension est calculé à partir d'une quantité de tronçons de chemin Aᵢ possibles en partant du point de démarrage (76) local de la ligne médiane c (44), lesquelles sections de chemin possibles sont quant à elles déterminées **en ce que** des tronçons de chemin de ligne médiane cᵢ (70) possibles de la longueur de tronçon de chemin Lᵢ sont déterminés avec des points finaux (78) locaux possibles, dans lequel pour chaque tronçon de chemin de ligne médiane cᵢ (70) possible, au moins une ligne de terminaison (80) est déterminée dans un premier temps le long de la surface intérieure (26) des demi-coques (20, 22), qui s'étend à angle droit par rapport au tronçon de chemin de ligne médiane cᵢ (70) possible respectif à travers son point final (78) local, dans lequel des tronçons de chemin de fibres marginales aᵢ, bᵢ (72, 74) sont immédiatement après déterminés, **en ce que** des points finaux (78) correspondants de tronçons de chemin de fibres marginales aᵢ, bᵢ, (72, 72) sont fixés selon la distance latérale prédéfinie par rapport au point final (78) du tronçon de chemin de ligne médiane cᵢ (70) possible sur la ligne de terminaison (80) déterminée et des tronçons de chemin de fibres marginales aᵢ, bᵢ, (72, 74) entre les points de démarrage (76) locaux et les points finaux (78) des tronçons de chemin de fibres marginales aᵢ, bᵢ (72, 74), qui ont respectivement la distance latérale prédéfinie par rapport au tronçon de chemin de ligne médiane cᵢ (70) possible, sont immédiatement après calculés, dans lequel un tronçon de chemin A_{i,opt} optimisé en matière de tension est déterminé immédiatement après à partir des tronçons de chemin Aᵢ possibles déterminés, dans lequel une différence des longueurs des deux tronçons de chemin de fibres marginales aᵢ, bᵢ (72, 74) est plus petite dans le tronçon de chemin A_{i,opt} que dans d'autres tronçons de trajet possibles Aᵢ, en particulier est minimale.

6. Procédé selon l'une quelconque des revendications 2 à 4, **caractérisé en ce que** lors de chaque étape i itérative de possibles paires de tronçons de chemin de fibres marginales aᵢ, bᵢ (72, 74) de même longueur sont déterminées en partant des points de départ (76) locaux des tronçons de trajet de fibres marginales ai, bi (72, 74), dont la distance sur la surface intérieure (26) incurvée des semi-coques (20, 22) correspond à la largeur (54) de la semelle de longeron de pale de rotor (60) guidée de manière correspondante, dans lequel un tronçon de chemin A_{i,opt} optimisé en matière de tension est déterminé à partir des paires possibles déterminées de tronçons de chemin de fibres marginales aᵢ, bᵢ (72, 74), dans laquelle une valeur d'un angle d'intersection entre une ligne de terminaison menant à travers des points finaux (78) locaux des tronçons de chemin de fibres marginales aᵢ, bᵢ (72, 74) et un tronçon de chemin de fibres marginales aᵢ, bᵢ (72, 74) ou un tronçon de chemin de ligne médiane cᵢ (70) située entre les tronçons de chemin de fibres marginales aᵢ, bᵢ (72, 74) diverge de moins de 90° que dans le cas d'autres paires possibles, en particulier est égale à 90°.

7. Procédé selon l'une quelconque des revendications 1 à 6, **caractérisé en ce que** le chemin optimisé en matière de tension trouvé est coulissé ultérieurement par endroits latéralement si loin en direction du plan d'entretoise (30) jusqu'à ce que les entretoises (32, 34) puissent être positionnées sur la totalité de la longueur sur la semelle de longeron de pale de rotor (40, 42, 60) si le chemin trouvé optimisé en matière de tension ne le permet pas par endroits.

8. Procédé selon l'une quelconque des revendications 1 à 7, **caractérisé en ce que** le procédé de calcul itératif calcule des chemins possibles de points de départ globaux variables et/ou selon des angles de départ variables et un chemin optimisé en matière de tension est déterminé à partir de la quantité trouvée de chemins possibles, qui requiert moins ou le moins de corrections aux fins du positionnement des entretoises (32, 34) sur la semelle de longeron de pale de rotor (40, 42, 60) en comparaison avec d'autres chemins possibles.

9. Procédé selon l'une quelconque des revendications 1 à 8, **caractérisé en ce que** la forme des demi-coques (20, 22) est modifiée quand le procédé de calcul itératif ne parvient pas à un résultat, dans lequel les couches du matériau composite à base de fibres peuvent être placées dans un moule compte tenu de leurs propriétés de rigidité sans être pliées ni coudées le long du chemin optimisé en matière de tension et éventuellement coulissé latéralement localement.

10. Pale de rotor (10) avec une semelle de longeron de pale de rotor (60), dont le façonnage a été calculé dans un procédé selon l'une quelconque des revendications 1 à 9 et qui est fabriquée ou peut être fabriquée sans être pliée et coudée dans un moule pour la semelle de longeron de pale de rotor (60), dans laquelle la ligne médiane (44) de la semelle de longeron de pale de rotor (60) diverge du plan d'entretoise (30) d'une manière variable en soi au moins par endroits le long de la direction longitudinale de la pale de rotor (10).

11. Pale de rotor (10) selon la revendication 10, **caractérisée en ce que** la couche ou les couches du matériau composite à base de fibres comprend ou comprennent une ou plusieurs couches composées de barres pultrudées disposées les unes à côté des autres et/ou une ou plusieurs couches pultrudées avec des fibres unidirectionnelles intégrées dans un matériau de matrice pouvant être durci ou durci, en particulier des fibres de verre et/ou des fibres de carbone ou en est constituée ou en sont constituées.

12. Eolienne avec au moins une pale de rotor (10) selon la revendication 11.
